# EUROPÄISCHE PATENTSCHRIFT

(11) **EP 1 462 787 B1**
(45) Veröffentlichungstag und Bekanntmachung des Hinweises auf die Patenterteilung: **26.04.2006**
(21) Anmeldenummer: 04003894.5
(22) Anmeldetag: 20.02.2004
(51) Int. Cl.: G01M 3/00, G01M 3/38

(54) **Einrichtung zum Inspizieren eines Rohrabzweigs**
Device for inspecting pipe branchings
Dispositif d'inspection de dérivations des tuyauteries

(30) Priorität: 13.03.2003 DE 10310926; 17.04.2003 DE 10317750
(43) Veröffentlichungstag der Anmeldung: 29.09.2004
(73) Patentinhaber: Framatome ANP GmbH, 91058 Erlangen (DE)
(72) Erfinder: Staudigel, Robert, 91315 Höchstadt (DE); Bischoff, Bernd, 91334 Hemhofen (DE)
(74) Vertreter: Mörtel, Alfred

(56) Entgegenhaltungen:
- DE-A- 19 800 670
- DE-A- 19 820 130
- US-A- 5 457 288

## Beschreibung

Die Erfindung bezieht sich auf eine Einrichtung zum Inspizieren eines Rohrabzweigs, insbesondere zum visuellen Inspizieren eines in die Hauptkühlmittelleitung des Primärkreislaufes eines Kernkraftwerkes mündenden Thermosleeverohres.

Bei der Inspektion von Rohrleitungen wird in der Regel der zu untersuchende Rohrabschnitt zunächst trockengelegt, um von einem Inspektionsfahrzeug befahren werden zu können. Dies ist insbesondere bei der Untersuchung von Anlagenteilen im Primärkreislauf eines. Kernkraftwerkes mit einer erheblichen Dosisbelastung des Personals verbunden. Aus diesem Grund ist es insbesondere in der nuklearen Kraftwerkstechnik bekannt, Inspektionen mit Manipulatoren durchzuführen, die unter Wasser eingesetzt werden.

In der DE 34 34 051 A1 ist beispielsweise eine Anordnung zum Inspizieren des Bodens eines Reaktordruckbehälters offenbart, die ein flexibles Rohr umfasst, das an seinem freien Ende eine Unterwasserkamera trägt. Das flexible Rohr wird über ein ortsfest oberhalb des Reaktorbeckens angeordnetes Führungsrohr bis zum Boden geführt und kann dort umgelenkt werden, so dass es zwischen die am Boden eingeschweißten Stutzen manövriert werden kann.

Aus der US 4,175,645 A ist ein Unterwasserfahrzeug bekannt, das innerhalb einer gefluteten Rohrleitung entlang eines im Rohrinneren verlegten Kabels verfahren werden kann.

Für die Inspektion eines Seitenkanals ist aus der DE 198 00 670 A1 ein sogenannter Kanalroboter bekannt, bei dem an einem, auf Rollen in einem Hauptkanal fahrbaren Basisfahrzeug eine Schwenkmanschette angeordnet ist, durch die ein Vorschubschlauch hindurchgreift, der an seinem vorderen Ende eine Kamera trägt. Mit Hilfe der Schwenkmanschette kann der Vorschubschlauch auf den Seitenkanal ausgerichtet und die Kamera in diesen eingefahren werden.

Zur Durchführung einer Inspektion unter Wasser ist es außerdem beispielsweise aus der US 4,175,269 A und der DE 198 20 130 A1 grundsätzlich bekannt, fernsteuerbare Unterwasserfahrzeuge einzusetzen, die frei beweglich und manövrierbar und deshalb flexibler für unterschiedliche Inspektionsaufgaben einsetzbar sind. Auf Grund der systembedingten Abmessungen eines solchen Unterwasserfahrzeugs können jedoch insbesondere Rohrabzweige oder Rohrleitungen mit einer kleinen lichten Weite nicht unmittelbar angefahren werden. Eine solche Situation liegt bei der Prüfung der innenliegenden Schweißnähte eines Wärmeschutzrohres (thermosleeve) vor, das zum Einspeisen von kaltem Kühlwasser in die Hauptkühlmittelleitung dienen.

Der Erfindung liegt nun die Aufgabe zu Grunde, eine Einrichtung zum Inspizieren eines Rohrabzweigs anzugeben, die bei gefluteter Rohrleitung eingesetzt werden kann.

Die genannte Aufgabe wird gemäß der Erfindung gelöst mit einer Einrichtung mit den Merkmalen des Patentanspruches 1. Gemäß diesen Merkmalen enthält die Einrichtung zum Inspizieren eines Rohrabzweigs, insbesondere zum Inspizieren eines in die Hauptkühlmittelleitung des Primärkreislaufes mündenden Wärmeschutzrohres, ein fernsteuerbares Unterwasserfahrzeug, an dem ausfahrbar eine flexible Lanze angeordnet ist, die an ihrem freien Ende eine Inspektionseinrichtung, insbesondere eine Kamera, trägt und am Unterwasserfahrzeug in einer Führung zum Ausrichten der flexiblen Lanze auf den Mündungswinkel des Rohrabzweigs geführt ist. Durch diese Maßnahme ist es möglich, eine Inspektionseinrichtung in das Innere eines Rohrabzweigs einzuführen, der auf Grund der engen räumlichen Verhältnisse selbst nicht mit dem Unterwasserfahrzeug befahrbar ist.

Weitere vorteilhafte Ausgestaltungen der Erfindung sind in den Unteransprüchen wiedergegeben.

Zur weiteren Erläuterung der Erfindung wird auf das Ausführungsbeispiel der Zeichnung verwiesen. Es zeigen:
- Fig. 1 und 2: eine Einrichtung gemäß der Erfindung in einer schematischen Draufsicht bzw. einer schematischen perspektivischen Darstellung,
- Fig. 3: einen schematischen Querschnitt durch eine besonders geeignete flexible Lanze.

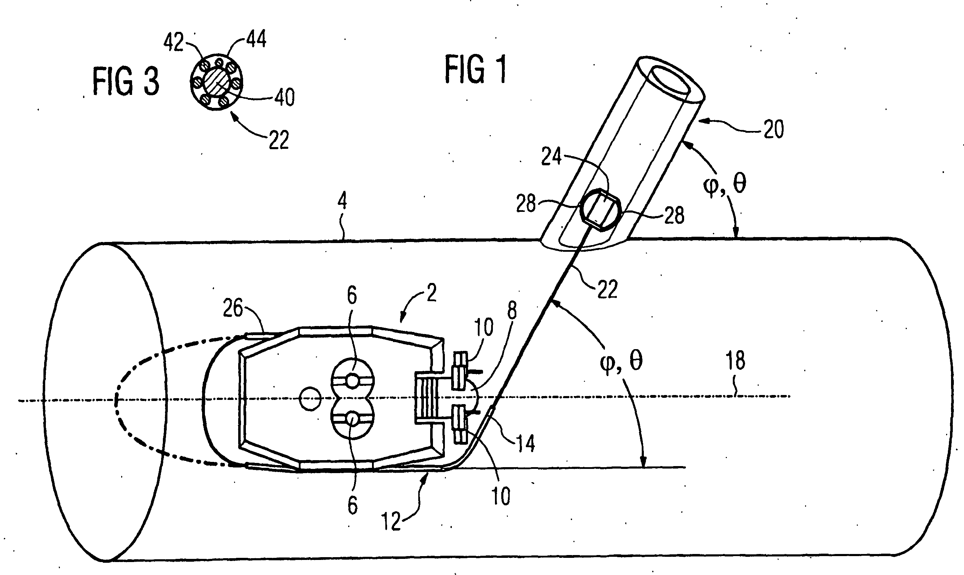

Gemäß Fig. 1 umfasst die Einrichtung als Basisfahrezug ein fernsteuerbares Unterwasserfahrzeug 2, wie es beispielsweise unter dem Handelsnamen "SUSI" der Framatome ANP GmbH bekannt ist. Das Unterwasserfahrzeug 2 ist in der Figur in Arbeitsposition in einer gefluteten Rohrleitung 4, im Beispiel die Hauptkühlmittelleitung im Primärkreis eines Kernkraftwerkes, dargestellt. In dieser Arbeitsposition wird das Unterwasserfahrzeug 2 durch seine Antriebsaggregate 6, von denen in der Figur nur zwei sichtbar sind, in einer stabilen Schwebeposition gehalten. An seiner Stirnseite ist eine schwenkbare Kamera 8 angeordnet, die von einer Mehrzahl von Lichtquellen 10 umgeben ist.

Seitlich am Unterwasserfahrzeug 2 ist gemäß der Erfindung eine Führung 12, im Beispiel ein starres Rohr, angeordnet, die an ihrem freien Ende 14 derart gebogen ist, dass dieses einen geradlinigen Bereich 16 aufweist, der gegenüber der Längsmittenachse 18 des Unterwasserfahrzeugs 2 um einen Winkel ϕ und gegenüber der senkrecht zur Zeichenebene orientierten Vertikalen um einen Winkel θ geneigt ist. Dieser Raumwinkel ϕ, θ entspricht dem Mündungswinkel eines zu untersuchenden Rohrabzweigs 20, bei dem es sich im Ausführungsbeispiel um ein doppelwandiges Wärmeschutzrohr handelt. Im Ausführungsbeispiel (horizontaler Rohrabzweig) ist θ = 0°.

In der Führung 12 ist verschiebbar eine flexible Lanze 22 geführt, die durch die gebogene Führung 12 auf den Rohrabzweig 20 ausgerichtet ist. Am freien Ende der Lanze 22 befindet sich eine Überwachungskamera 24, die mit Hilfe der Lanze 22 in den Rohrabzweig 20 eingeführt ist. Die Lanze 22 ist bei ausreichender Flexibilität, die zur Umlenkung in der Führung 12 erforderlich ist, hinreichend druckstabil, um ein Einführen der Kamera 24 in den Rohrabzweig 20 zu ermöglichen.

Die Lanze 22 ist auf der Rückseite des Unterwasserfahrzeugs 2 um dieses herumgeführt und mündet auf der der Führung 12 gegenüberliegenden Seite des Unterwasserfahrzeugs 2 in eine ebenfalls rohrförmige Aufnahme 26, in der es fixiert ist. Zwischen Führung 4 und Aufnahme 26 verläuft die Lanze 22 frei und wird im eingefahrenen Zustand, wie dies gestrichelt in der Figur angedeutet ist, hinter dem Unterwasserfahrzeug 2 frei hängend mitgeführt.

Im Bereich des freien Endes der Lanze 22, im Ausführungsbeispiel unmittelbar am Gehäuse der Kamera 24, ist eine Zentriereinrichtung 28 zum Zentrieren und Stabilisieren der Kamera 24 in der Achsenmitte des Rohrabzweigs 20 angeordnet. Die Zentriereinrichtung 28 umfasst eine Mehrzahl am Umfang des Kameragehäuses verteilter elastischer Zentrierelemente, die jeweils aus einem bogenförmig vorgespannten Biegeelement, beispielsweise ein Draht oder ein Glasfaserbündel, bestehen und an der Innenwand des Wärmeschutzrohres gleitend anliegen.

Die Inspektionseinrichtung besteht vorzugsweise aus einer Schwenk-Rotationskamera mit integrierter Beleuchtung und erlaubt somit die visuelle Inspektion der Einschweißnaht über den kompletten Umfang von 360°. Bei kleineren Wärmeschutzrohren wird an Stelle einer Schwenk-Rotationskamera vorzugsweise eine spezielle Geradblick-Weitwinkelkamera mit integrierter Beleuchtung verwendet.

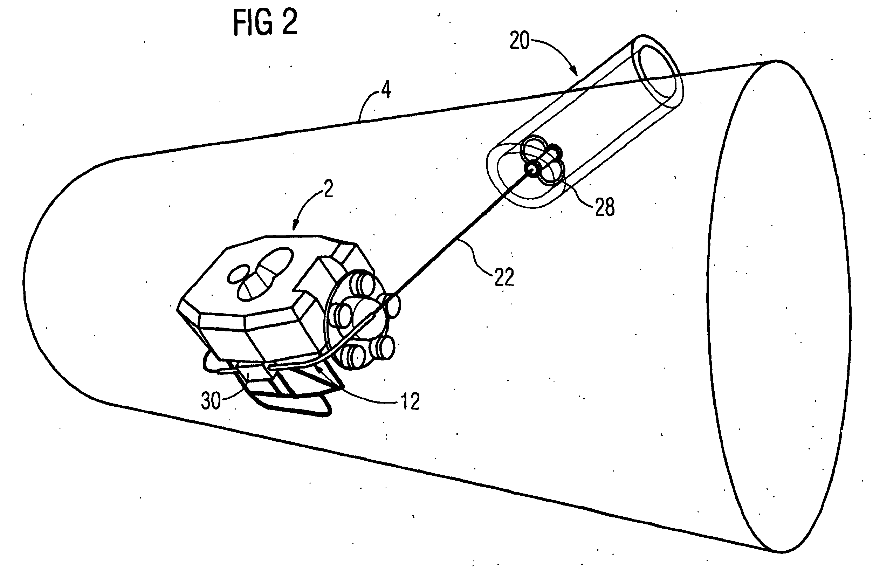

In Fig. 2 ist außerdem noch eine Antriebsvorrichtung 30 für die Lanze 22 zu erkennen, mit deren Hilfe die Lanze 22 durch die Führung 12 hindurch geschoben wird.

Gemäß Fig. 3 besteht die Lanze 22 aus einem Glasfaserkabel 40, das an seinem Umfang von elektrischen Leitungen 42 umgeben ist, die zur Steuerung der Kamera und zur Übermittlung der von ihr aufgenommenen Bilddaten dienen. Eine zusätzliche Ummantelung 44 fixiert diese elektrischen Leitungen 42 auf dem Glasfaserkabel 40.

## Patentansprüche

1. Einrichtung zum Inspizieren eines Rohrabzweigs (20), insbesondere zum Inspizieren eines in die Hauptkühlmittelleitung (4) des Primärkreislaufes eines Kernkraftwerkes mündenden Wärmeschutzrohres, mit einem fernsteuerbaren Unterwassenschwebefahrzeug (2), an dem ausfahrbar eine flexible Lanze (22) angeordnet ist, die an ihrem freien Ende eine Inspektionsgerät, insbesondere eine Kamera (24), trägt und am Unterwasserschwebefahrzeug (2) in einer Führung (12) zum Ausrichten der flexiblen Lanze (22) auf den Mündungswinkel (ϕ, θ) des Rohrabzweigs (20) geführt ist.

2. Einrichtung nach Anspruch 1, bei der die flexible Lanze (22) als tragendes Element ein Glasfaserkabel (22) umfasst.

3. Einrichtung nach Anspruch 1 oder 2, bei der im Bereich des freien Endes der Lanze eine Zentriereinrichtung (28) zum Zentrieren und Stabilisieren des Inspektionsgerätes in der Achsmitte des Rohrabzweigs (20) angeordnet ist.

4. Einrichtung nach Anspruch 3, bei der die Zentriereinrichtung (28) eine Mehrzahl um den Umfang der Lanze verteilte elastische Zentrierelemente umfasst.

5. Einrichtung nach Anspruch 4, bei der als Zentrierelement ein bogenförmig vorgespanntes Biegeelement vorgesehen ist.

6. Einrichtung nach einem der vorhergehenden Ansprüche, bei der die Führung (12) an einer Seite des Unterwasserschwebefahrzeugs (2) angeordnet ist, und die Lanze (22) auf der der Führung gegenüberliegenden Seite des Unterwasserschwebefahrzeugs (2) fixiert ist, wobei die Lanze (22) zwischen der Führung (12) und der Fixierung frei hängend hinter dem Unterwasserschwebefahrzeug (2) mitgeführt ist.

## Claims

1. Device for inspecting a pipe branch (20), in particular for inspecting a heat exchange tube which opens into the main coolant line (4) of the primary circuit of a nuclear power station, having a remote-controllable underwater float vehicle (2) on which a flexible lance (22) is arranged so that it can be deployed, which lance carries an inspection instrument, in particular a camera (24), on its free end and is guided on the underwater float vehicle (2) in a guide (12) for aligning the flexible lance (22) with the opening angle (ϕ, θ) of the pipe branch (20).

2. Device according to Claim 1, wherein the flexible lance (22) comprises a glass fibre cable (22) as a supporting element.

3. Device according to Claim 1 or 2, wherein a centring device (28) for centring and stabilizing the inspection instrument axially in the middle of the tube branch (20) is arranged in the region of the free end of the lance.

4. Device according to Claim 3, wherein the centring device (28) comprises a multiplicity of resilient centring elements distributed around the circumference of the lance.

5. Device according to Claim 4, wherein a curved prestressed bending element is provided as the centring element.

6. Device according to one of the preceding claims, wherein the guide (12) is arranged on one side of the underwater float vehicle (2), and the lance (22) is fixed on the opposite side of the underwater float vehicle (2) from the guide, the lance (22) being trailed behind the underwater float vehicle (2) so that it is freely suspended between the guide (12) and the fastening.

## Revendications

1. Dispositif d'inspection d'une dérivation (20) de tuyauterie, notamment d'inspection d'un tuyau de protection vis-à-vis de la chaleur débouchant dans le conduit (4) principal de fluide de refroidissement du circuit primaire d'une centrale nucléaire, comprenant un aéroglisseur (2) sous-marin pouvant être télécommandé et sur lequel est montée de manière à pouvoir être déployée une lance (22) souple qui porte à son extrémité libre un appareil d'inspection, notamment une caméra (24), et qui est guidée sur l'aéroglisseur (2) sous-marin dans un guidage (12) d'orientation de la lance (22) souple sur l'angle (ϕ, θ) d'embouchure de la dérivation (20) de tuyauterie.

2. Dispositif suivant la revendication 1, dans lequel la lance (22) souple comprend un câble (22) en fibre de verre comme élément porteur.

3. Dispositif suivant la revendication 1 ou 2, dans lequel il est disposé dans la zone de l'extrémité libre de la lance un dispositif (28) de centrage et de stabilisation de l'appareil d'inspection dans le milieu axial de la dérivation (20) de tuyauterie.

4. Dispositif suivant la revendication 3, dans lequel le dispositif (28) de centrage comprend une multiplicité d'éléments de centrage élastiques, répartis sur le pourtour de la lance.

5. Dispositif suivant la revendication 4, dans lequel il est prévu comme élément de centrage un élément de flexion précontraint en forme d'arc.

6. Dispositif suivant l'une des revendications précédentes, dans lequel le guidage (12) est disposé d'un côté de l'aéroglisseur (2) sous-marin et la lance (22) étant entraînée derrière l'aéroglisseur (2) sous-marin en pendant librement entre le guidage (12) et l'immobilisation.
